# EUROPEAN PATENT APPLICATION

(11) **EP 4 848 161 A1**
(43) Date of publication of application: **02.12.2026**
(21) Application number: 26181371.1
(22) Date of filing: 27.05.2026
(51) Int. Cl.: G06N 20/00, G06N 5/04

(54) **COMPUTER PROGRAM, INFORMATION PROCESSING METHOD, AND INFORMATION PROCESSING APPARATUS**

(30) Priority: 30.05.2025 JP 2025091090
(71) Applicant: FUJITSU LIMITED, Kawasaki-shi, Kanagawa 211-8588 (JP)
(72) Inventor: KANAMORI, Kentaro, Kawasaki-shi, Kanagawa, 211-8588 (JP); TAKAGI, Takuya, Kawasaki-shi, Kanagawa, 211-8588 (JP)
(74) Representative: Hoffmann Eitle

(57) **Abstract**

An information processing apparatus acquires second information. The second information indicates whether an action for improving a state of a user to a predetermined criterion has been executed by the user who has confirmed first information indicating the action and whether the state of the user has reached the predetermined criterion. The information processing apparatus trains a first machine learning model used for determining the action, by using training data obtained based on the first information and the second information.

## Description

### FIELD

The embodiments discussed herein relate to a computer program, an information processing method, and an information processing apparatus.

### BACKGROUND

In a computer system using artificial intelligence (AI), which may be referred to as "AI system", it is possible to evaluate the state of an individual from various viewpoints, using a machine learning model. For example, an AI system evaluates appropriateness of financing by means of a loan for a user who has made a loan application, on the basis of values of various attributes related to the repayment ability of the user (the income, presence or absence of another loan, and the like).

There are cases in which a user who has received a negative evaluation result in the AI system wishes to know which attribute values need to change and how much these attribute values need to change in order to change the evaluation result positively. Thus, the AI system is able to present an action for obtaining a positive evaluation result, as an explanation of the evaluation result.

As a technique usable for inference of information to be presented, for example, there has been proposed an estimation apparatus for improving estimation accuracy of a user's credibility. There has also been proposed a recommendation system that recommends information highly valuable to a user. There has also been proposed an information presentation apparatus that presents an action to be recommended in consideration of a time series of actions of a user. There has also been proposed a system that collects and analyzes user data for decisions regarding a user's wellness. In addition, a technique has also been proposed to support understanding what needs to be changed to achieve a desired result in the future based on a current decision-making model. See, for example, the following literatures.
Japanese Laid-open Patent Publication No. 2020-204979
Japanese Laid-open Patent Publication No. 2021-22243
International Publication Pamphlet No. WO 2021/044586
U.S. Patent Application Publication No. 2018/0011978
S. Wachter et al., "Counterfactual Explanations Without Opening the Black Box: Automated Decisions and the GDPR", 10 May 2018, Harvard Journal of Law & Technology, Volume 31, Number 2

If a user who has received a negative determination from the AI system executes an action presented by the AI system and the user's state improves to a predetermined reference, the user will be able to receive a positive determination from the AI system. However, the action presented by the AI system has not taken into account the labor for performing the action, success or failure obtained as a result of the performed action, and the like. Therefore, it is unclear whether the presented action will be executed and the improvement target of the state of the user will be achieved. If an action with a low possibility of improving the state of the user is presented, this action is not useful for the user.

### SUMMARY

In one aspect, an object of the present application is to present an action with a high possibility of improving a state.

In one aspect, there is provided a computer program that causes a computer to execute a process including: acquiring second information that indicates whether an action for improving a state of a user to a predetermined criterion has been executed by the user who has confirmed first information indicating the action and whether the state of the user has reached the predetermined criterion; and training a first machine learning model used for determining the action, by using training data obtained based on the first information and the second information.

### BRIEF DESCRIPTION OF DRAWINGS

FIG. 1 is a diagram illustrating an example of an information processing method according to a first embodiment;
FIG. 2 is a diagram illustrating an example of a system configuration according to a second embodiment;
FIG. 3 is a diagram illustrating an example of hardware of a server;
FIG. 4 is a diagram illustrating an example of action presentation;
FIG. 5 is a diagram illustrating an example of a case where a prediction logic in a determination AI system is different from an actual situation;
FIG. 6 is a diagram illustrating an example of a situation in which the state of the user has been improved by the presented action;
FIG. 7 is a diagram illustrating an example of functions of the server for presenting an appropriate action;
FIG. 8 is a diagram illustrating an example of action constraint conditions;
FIG. 9 is a diagram illustrating an example of an observation target user table;
FIG. 10 is a diagram illustrating an example of a training data table;
FIG. 11 is a flowchart illustrating an example of a procedure of an action presentation process;
FIG. 12 is a diagram illustrating an example of action presentation;
FIG. 13 is a diagram illustrating an example of an estimation model update process;
FIG. 14 is a diagram illustrating examples of an observation result obtained after execution of a presented action;
FIG. 15 is a diagram illustrating an example of an estimation model training process;
FIG. 16 is a flowchart illustrating an example of a procedure of the estimation model training process; and
FIG. 17 is a diagram illustrating an example of an estimation model update process.

### DESCRIPTION OF EMBODIMENTS

Hereinafter, embodiments will be described with reference to the drawings. Each embodiment may be implemented by combining a plurality of embodiments insofar as there is no inconsistency.

### [First Embodiment]

The first embodiment proposes an information processing method for presenting, to a user, an action that is highly likely to improve a state of the user. The state of the user is, for example, a state related to a payment ability of a loan, a health state, or the like.

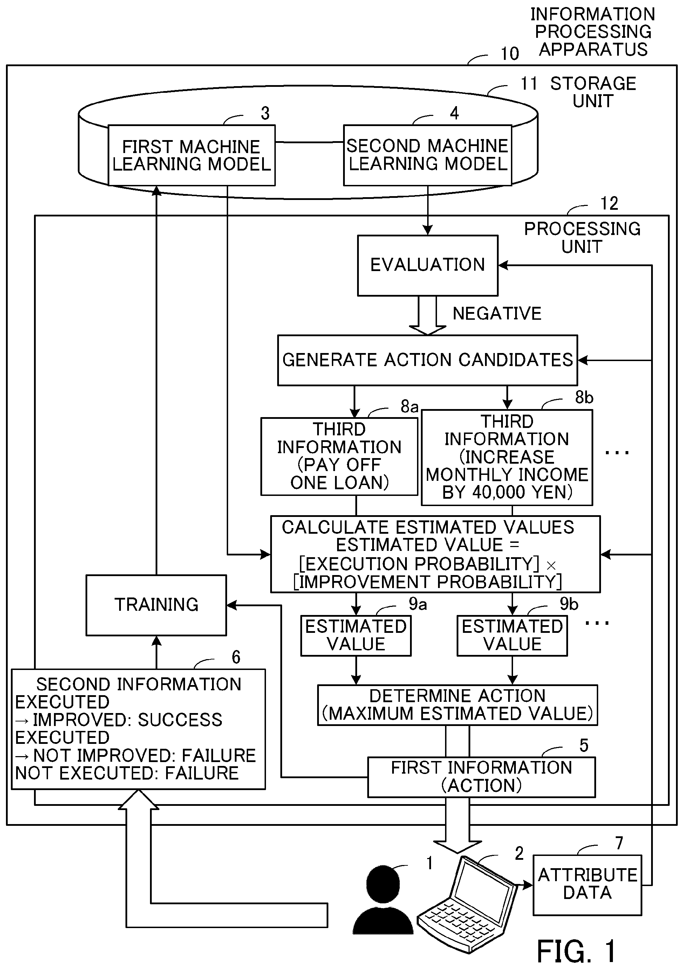

FIG. 1 is a diagram illustrating an example of an information processing method according to the first embodiment. FIG. 1 illustrates an information processing apparatus 10 for implementing the information processing method according to the first embodiment. The information processing apparatus 10 is able to implement the information processing method according to the first embodiment, for example, by executing a predetermined information processing program.

The information processing apparatus 10 includes a storage unit 11 and a processing unit 12. The storage unit 11 is, for example, a memory or a storage device included in the information processing apparatus 10. The processing unit 12 is, for example, a processor included in the information processing apparatus 10. The information processing apparatus 10 may include a plurality of processors. A certain process and another process among a plurality of processes for realizing the information processing method according to the first embodiment may be executed by different processors.

The storage unit 11 stores, for example, a first machine learning model 3 and a second machine learning model 4. The first machine learning model 3 and the second machine learning model 4 are models that have been trained by machine learning.

The first machine learning model 3 is a model that receives, for example, a value of an attribute related to a state of a user 1 and outputs an estimated value of an action for improving the state of the user 1 to a predetermined criterion. The predetermined criterion of the state of the user 1 is, for example, that the user is able to pay off a loan (the user 1 has a repayment ability). The estimated value is, for example, a probability that the user 1 confirms an action candidate and executes the action candidate, and that the state of the user 1 reaches a predetermined criterion as a result of the execution of the action candidate by the user 1. Such an estimated value is represented by "execution probability of the user 1 × improvement probability of the state of the user 1 by the execution".

The second machine learning model 4 is, for example, a model that receives a value of an attribute related to a state of the user 1 and outputs a result of a predetermined evaluation of the user 1.

The processing unit 12 trains the first machine learning model 3 in the following procedure. Training a model, such as the first machine learning model 3, may also be referred to as learning.

The processing unit 12 determines an action for improving the state of the user 1 to a predetermined criterion by using the first machine learning model 3. For example, the processing unit 12 generates a plurality of items of third information 8a, 8b, ... indicating action candidates for improving the state of the user 1 to a predetermined criterion. For example, actions that improve the loan repayment ability of the user 1 to a state in which the user 1 is able to pay off the loan (repayment of a loan being repaid, increase of the monthly income) are indicated in the third information 8a, 8b, ... as action candidates.

Next, the processing unit 12 calculates estimated values 9a, 9b, ... for the plurality of items of third information 8a, 8b, ..., respectively, using the first machine learning model 3. For example, the processing unit 12 performs calculation according to the first machine learning model 3 by using attribute data 7 of the user 1 and the third information 8a, 8b, ... as inputs to the first machine learning model 3. The processing unit 12 obtains the estimated values 9a, 9b, ... as outputs of the first machine learning model 3. The attribute data 7 includes, for example, information about the user 1 related to attribute items (the number of loans being repaid, the monthly income, and the like) related to the loan repayment ability.

Then, the processing unit 12 determines an action for improving the state of the user 1 to a predetermined criterion on the basis of the estimated values 9a, 9b, ... of the plurality of items of third information 8a, 8b, .... For example, the processing unit 12 determines an action candidate that corresponds to the maximum estimated value and that is indicated in the third information, as the action for improving the state of the user 1 to a predetermined criterion.

The processing unit 12 outputs first information 5 indicating the determined action. For example, the processing unit 12 transmits the first information 5 to a terminal apparatus 2 used by the user 1. The user 1 recognizes the action for improving the state of the user 1 to a predetermined criterion by checking the output first information 5.

The processing unit 12 acquires second information 6 indicating whether the action has been executed by the user 1 who has confirmed the first information 5 and the state of the user 1 has reached the predetermined criterion. The second information 6 indicates, for example, information indicating whether the user 1 has executed the presented action and has succeeded or failed in improving the state of the user 1 to the predetermined criterion. If the action has been executed by the user 1 who has confirmed the first information 5 and the state of the user 1 has reached the predetermined criterion, success is determined. If the action has been executed by the user 1 who has confirmed the first information 5 but the state of the user 1 has not reached the predetermined criterion, failure is determined. If the action has not been executed by the user 1 who has confirmed the first information 5, failure is determined in this case, too.

The processing unit 12 trains the first machine learning model 3 by using training data obtained based on the first information 5 and the second information 6. In the training data, for example, the first information 5 and the attribute data 7 are set as input data at the time of training, and the second information 6 is set as a correct label.

In this way, the first machine learning model 3 is trained based on the success or failure of the action presented to the user 1. The processing unit 12 repeatedly executes presentation of actions to other users and training based on the execution results of the actions by these users. As a result, when presenting an action that improves the state of a certain user, it is possible to present an action that is highly likely to improve the state of the user such that the state of the user satisfies a predetermined criterion.

For example, in the case of an action that has a high user state improvement effect and that is very difficult to execute, even if the action is presented to the user, the action is not useful for the user. On the other hand, if there are a plurality of actions that are able to improve the state of the user to the predetermined criteria, the processing unit 12 presents an action that is easier to execute (has a high probability of being executed by the user). In this case, by executing the presented action, the user is able to improve his/her own state and satisfy the predetermined criterion with minimum effort.

Note that the processing unit 12 is able to present an action to the user 1 in a case where a predetermined evaluation related to the state of the user 1 is negative. For example, the processing unit 12 acquires a determination result of a predetermined evaluation using the attribute data 7 of the user 1 by using the second machine learning model 4. When the determination result is negative, the processing unit 12 determines an action to be presented to the user 1.

In this way, when the determination result of the predetermined evaluation is negative, by presenting an appropriate action to the user 1, the user 1 is able to quickly know an action to be taken. For example, when the user 1 applies for a loan and the evaluation of the user 1 for making a contract for the loan is negative, the user 1 is presented with an action for acquiring the repayment ability of the loan. As a result, the user 1 is able to immediately perform an action to be taken and improve his/her state at an early stage.

As an action to be presented to the user 1 in a case where the evaluation is negative, the processing unit 12 presents an action for improving the substantial state of the user 1, instead of an action for simply making the evaluation positive. For example, the processing unit 12 uses the second machine learning model 4 to evaluate whether to make a contract with the user 1. Next, the processing unit 12 uses the first machine learning model 3 to determine an action such that the user 1 becomes able to fulfill the contract in a case where the contract is concluded. If the contract is a loan contract, not only an action for passing the examination of the loan but also an action for acquiring a repayment ability to pay off the loan is presented. As a result, for example, it is possible to avoid a situation in which the user 1 finds it difficult to repay even though the user 1 receives a loan and in which the user 1 is in monetary distress.

It is possible to grasp the implementation status of the user 1 regarding the action presented to the user 1, for example, by observing information about the user 1. For example, in the case of a financial institution, by observing information such as the repayment status of the loan of the user 1, the processing unit 12 is able to grasp whether an action of paying off the loan has been executed. The second information 6 obtained by observing the user 1 is used for training the first machine learning model 3 as a success case or a failure case.

For example, in a case where an action has been executed by the user 1 and the state of the user 1 has reached (improved to) a predetermined criterion, the processing unit 12 generates training data to which a label of success has been added. In addition, in a case where an action has not been executed by the user 1, or in a case where an action has been executed by the user 1 but the state of the user 1 has not reached (not improved to) a predetermined criterion, the processing unit 12 generates training data to which a label of failure has been added. It is possible to improve the accuracy of the first machine learning model 3 by training the first machine learning model 3 using the training data generated in this manner.

It is not easy to reliably recognize that the user 1 has not executed a presented action. Therefore, the processing unit 12 sets a time limit for observing execution of an action by the user 1. In a case where the execution result of the action by the user 1 has not been acquired even after the time limit, the processing unit 12 generates training data to which a failure label has been added. In this way, the processing unit 12 is able to appropriately generate training data related to failure cases, and is able to improve the accuracy of the first machine learning model 3.

### [Second Embodiment]

A second embodiment is a computer system that presents, to a user, a highly feasible action for improving the state of the user.

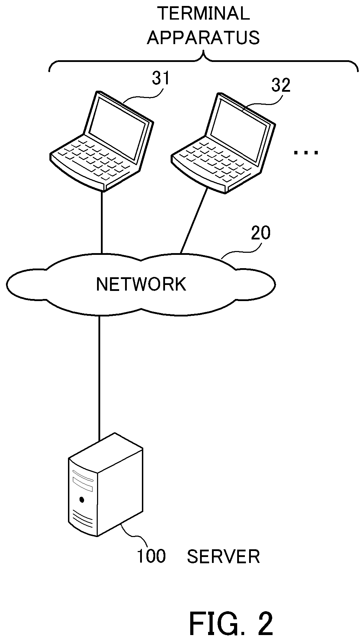

FIG. 2 is a diagram illustrating an example of a system configuration according to the second embodiment. A server 100 and a plurality of terminal apparatuses 31, 32, ... are connected to a network 20. The server 100 is a computer that determines a predetermined evaluation based on attributes of a user and presents an action for improving the determination result. The terminal apparatuses 31, 32, ... are computers used by users who request the server 100 to perform predetermined evaluations.

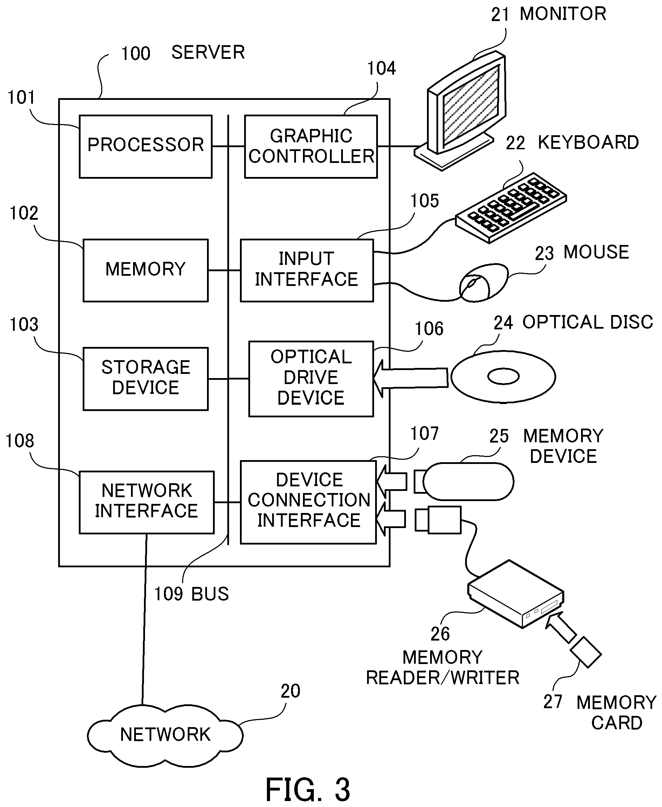

FIG. 3 is a diagram illustrating an example of hardware of the server. The entire server 100 is controlled by a processor 101. A memory 102 and a plurality of peripheral devices are connected to the processor 101 via a bus 109.

The server 100 may be a multiprocessor system having a plurality of processors. A set of processors in a multiprocessor system may be referred to as a processor 101. The processor 101 may be referred to as processor circuitry. Each of the plurality of processors may execute part or all of the plurality of processes executed by the server 100. When there are a plurality of related processes, two or more processes of the plurality of processes may be executed by different processors.

The processor 101 is, for example, a central processing unit (CPU), a micro processing unit (MPU), or a digital signal processor (DSP). At least part of the functions implemented by the processor 101 executing a program may be implemented by an electronic circuit such as an application specific integrated circuit (ASIC) or a programmable logic device (PLD).

The memory 102 is used as a main storage device of the server 100. The memory 102 temporarily stores at least part of the operating system (OS) programs and application programs to be executed by the processor 101. The memory 102 also stores various kinds of data used for processing by the processor 101. As the memory 102, for example, a volatile semiconductor storage device such as a random access memory (RAM) is used.

Examples of the peripheral devices connected to the bus 109 include a storage device 103, a graphic controller 104, an input interface 105, an optical drive device 106, a device connection interface 107, and a network interface 108.

The storage device 103 electrically or magnetically writes and reads data on a built-in recording medium. The storage device 103 is used as an auxiliary storage device of the server 100. The storage device 103 stores OS programs, application programs, and various kinds of data. As the storage device 103, for example, a hard disk drive (HDD) or a solid state drive (SSD) may be used.

The graphic controller 104 is an arithmetic device that performs image processing. The graphic controller 104 is, for example, a graphics processing unit (GPU). A monitor 21 is connected to the graphic controller 104. The graphic controller 104 displays an image on the screen of the monitor 21 in accordance with an instruction from the processor 101. Examples of the monitor 21 include a display device using organic electro luminescence (EL) and a liquid crystal display device. For example, when a GPU is used as the graphic controller 104, the graphic controller 104 may execute complex numerical computations such as matrix computations.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read-only memory (CD-ROM), a CD-Recordable (CD-R), CD-rewritable (CD-RW), or the like.

The device connection interface 107 is a communication interface for connecting peripheral devices to the server 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Alternatively, the network interface 108 may be a wireless communication interface that is connected to and that communicates with a wireless communication device such as a base station or an access point by radio waves.

The server 100 may implement the processing functions of the second embodiment by the hardware as described above. The information processing apparatus 10 described in the first embodiment may also be implemented by hardware similar to that of the server 100 illustrated in FIG. 3.

The server 100 implements the processing functions of the second embodiment by executing a program recorded in a computer-readable recording medium, for example. The program in which the processing contents to be executed by the server 100 are written may be recorded in various recording media. For example, a program to be executed by the server 100 may be stored in the storage device 103. The processor 101 loads at least part of the programs in the storage device 103 into the memory 102 and executes the program. The program to be executed by the server 100 may be recorded in a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and may execute the program.

In this system as described above, the server 100 performs evaluations according to various kinds of purposes in response to requests from the users who use the terminal apparatus 31, 32, .... For example, in response to a loan application from a user, the server 100 evaluates whether to approve the loan application. Such evaluation may be performed using, for example, AI technology.

If the user obtains a negative evaluation, the user is able to perform an appropriate action to obtain a positive evaluation by knowing what is insufficient to obtain a positive evaluation. The server 100 is able to present an action for obtaining a positive evaluation to the user.

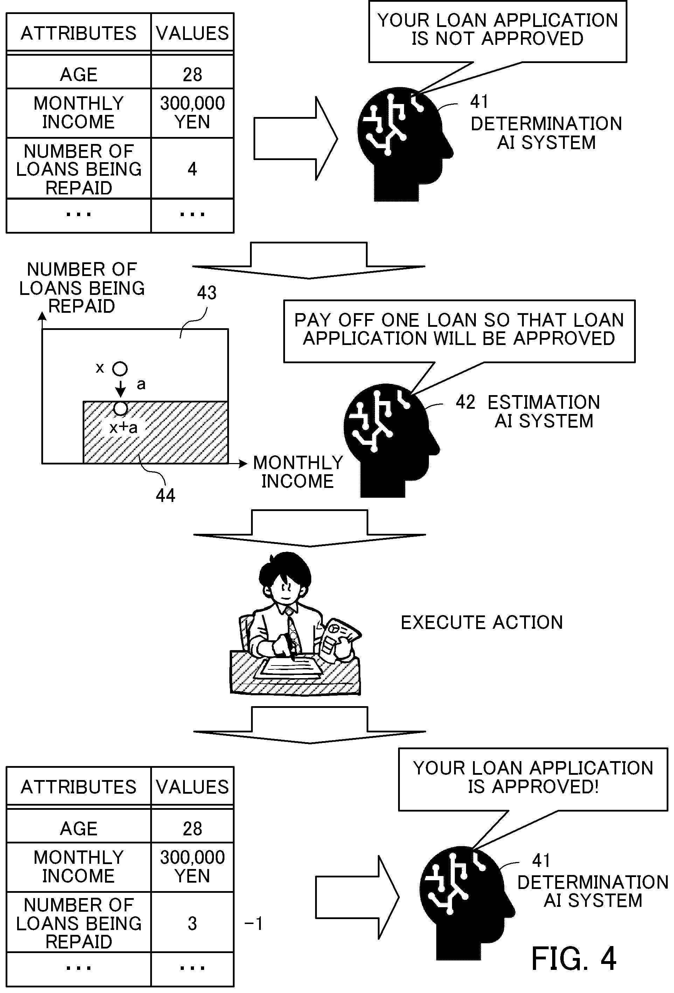

FIG. 4 is a diagram illustrating an example of action presentation. For example, in a case where the user applies for financing by means of a loan, whether to perform financing is evaluated based on attributes of the user. As the attributes of the user, the age, the monthly income, the number of loans being repaid, and the like are input from the user. A determination AI system 41 determines whether to approve the loan application based on the attributes of the user. In the example in FIG. 4, the determination AI system 41 determines not to approve the loan application.

In this case, an estimation AI system 42 presents an action that the user needs to take such that the loan application will be approved. For example, the estimation AI system 42 divides a determination space having the attribute items of the user as a dimension into a non-approval region 43 and an approval region 44 in accordance with the contents (the amount, the repayment schedule, and the like) of the requesting loan. A vector x indicating the value of each item of the current user attributes is included in the non-approval region 43.

The estimation AI system 42 obtains the shortest distance from the vector x to the approval region 44, and obtains a vector a of a difference corresponding to the shortest distance. A vector x + a obtained by adding the vector a to the vector x is included in the approval region 44. The estimation AI system 42 presents an action on the basis of the direction and the length of the vector a corresponding to the difference.

In the example in FIG. 4, the vector a indicates that the number of loans being repaid needs to decrease by one. Therefore, the estimation AI system 42 presents that the user needs to pay off one of the loans being repaid. It is assumed that the user has executed this action according to the presentation and has paid off one of the loans. Thereafter, when the user applies for the loan, since the attribute "the number of loans being repaid" of the user has decreased by one, the loan application is approved by the determination AI system 41.

In this way, by increasing a likelihood that a positive evaluation result is obtained by executing the presented action, the administrator of the server 100 is able to improve the user reliability in the evaluation using the AI. In addition, since an appropriate action is presented to the user, the user is able to minimize the effort for obtaining a positive evaluation.

However, even if the user receives a positive determination result from the AI by the execution of the action, there is a possibility that the user's state regarding whether the user is able to achieve the final purpose is not actually positive.

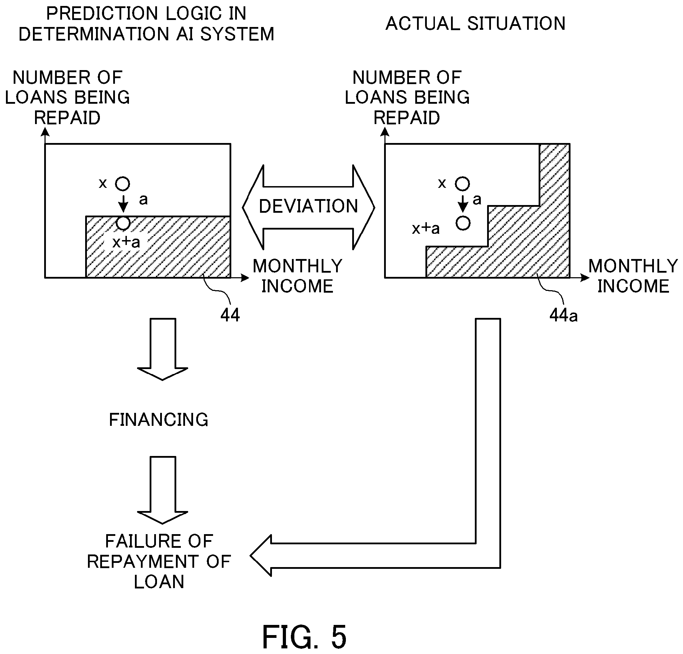

FIG. 5 is a diagram illustrating an example of a case where the prediction logic in the determination AI system and the actual situation are different. For example, according to the prediction logic in the determination AI system 41, if the user pays off one of the loans being repaid, the state of the user moves to the approval region 44 in the determination space having a dimension for each attribute.

However, the determination AI system 41 executes the evaluation of whether the loan contract is possible based on limited information about the user, and other information about the user not used for the evaluation is not taken into account. Due to the lack of data to be used, an approval region 44a based on the actual situation of the user deviates from the approval region 44 in the prediction logic in the determination AI system 41. The approval region 44a based on the actual situation of the user is a region indicating a range of the state of the user in which the user is able to reliably pay off the loan when the user actually makes the loan contract and receives the loan. According to the approval region 44a based on the actual situation of the user, in order to reliably pay off the loan borrowed by the user as a loan, the user needs not only to pay off one of the loans being repaid, but also to increase the monthly income.

In spite of this actual situation, if the user receives the loan without waiting for an increase in income by merely paying off one of the loans, the user concludes a loan contract in a state where the loan repayment ability is insufficient. Then, the subsequent repayment of the loan becomes unreasonable, and the user himself/herself suffers. As a result, the user may delay repayment of the loan and become unable to pay off the loan.

Therefore, it is appropriate to present an action for acquiring a state in which the user is able to achieve the purpose based on the actual condition of the user. For example, in a case where the user applies for a loan, it is appropriate to present an action for improving the state of the user so that the user is able to acquire a repayment ability to complete the loan with a high probability.

The second embodiment solves the following problems, in order to present an appropriate action for acquiring a state in which a user is able to achieve a purpose.

The first problem is that the improvement of the state of the user by a presented action is not correctly evaluated. For example, unless an action is executed, the result (improvement) is uncertain. The second problem is that the execution result (improvement) of a presented action is not observed unless the user actually executes the action. Even if the execution result has been observed, a delay occurs in the observation.

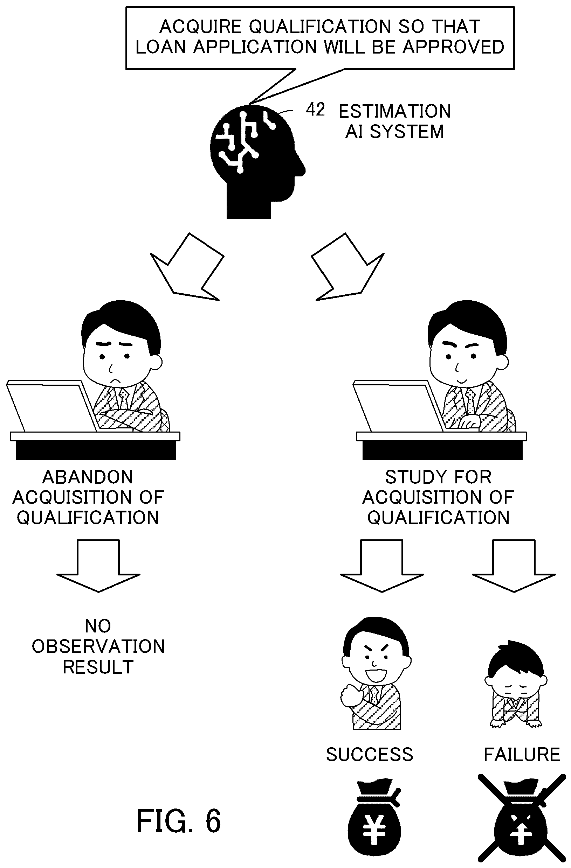

FIG. 6 is a diagram illustrating an example of a situation in which the state of the user is improved by a presented action. For example, it is assumed that the estimation AI system 42 presents acquisition of a predetermined qualification to the user so that the loan application by the user will be approved. In this case, if the difficulty level of the qualification to be acquired is high, the user may abandon the acquisition of the qualification without executing the action. In this case, an observation result regarding the action presented to the user is not obtained.

In addition, in response to the presentation of the action indicating the acquisition of the qualification, even when the user studies to acquire the qualification, the user may pass the qualification test or may fail the qualification test. If the user passes the qualification test, the state of the user improves as a result of the execution of the action. On the other hand, if the user fails the qualification test, the state of the user does not improve although the user has executed the action.

The result of the qualification is observable, for example, by receiving an input of information about the qualifications held by the user. When the presented action is the completion of the loan, in the case of a financial institution, whether the loan has been paid off is easily observed by using an existing credit information system. However, it takes time before the observation result is available.

Therefore, the server 100 continuously manages the information about the action presented to the user and observes whether the action has been executed by the user and whether the purpose has been achieved if the action has been executed. In addition, the server 100 presents an appropriate action suitable for the actual situation of the user on the basis of the execution status of the action.

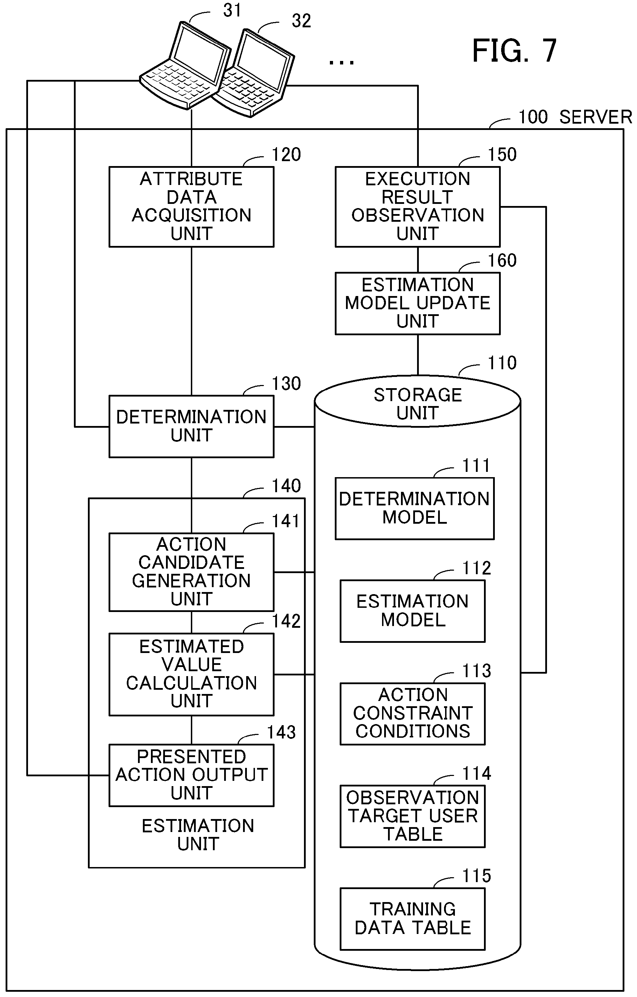

FIG. 7 is a diagram illustrating an example of functions of the server for presenting an appropriate action. The server 100 includes a storage unit 110, an attribute data acquisition unit 120, a determination unit 130, an estimation unit 140, an execution result observation unit 150, and an estimation model update unit 160.

The storage unit 110 stores a determination model 111, an estimation model 112, action constraint conditions 113, an observation target user table 114, and a training data table 115. The determination model 111 is a trained model that receives attribute data of a user as an input and outputs a result (positive or negative) of a predetermined evaluation related to the user.

The estimation model 112 is a trained model that receives attribute data of a user and an action candidate as inputs and outputs an estimated value of the action candidate. Note that the estimation model 112 may be a binary classification model that outputs information indicating whether the state of the user has been improved to a predetermined criterion by execution of an action indicated by an action candidate. Such an output is determined, for example, by whether the estimated value of the action candidate is equal to or greater than a predetermined threshold.

The action constraint conditions 113 are constraints related to an action to be presented to the user. The observation target user table 114 is a data table for managing an action execution status of a user to whom an action has been presented. The training data table 115 is a data table in which training data used for training the estimation model 112 is registered.

The attribute data acquisition unit 120 acquires attribute data of a user to be evaluated. For example, the attribute data acquisition unit 120 acquires an evaluation request including attribute data from a terminal apparatus used by a user. The attribute data acquisition unit 120 transmits the evaluation request including the attribute data to the determination unit 130.

The determination unit 130 evaluates the state of the user based on the attribute data of the user and determines whether the evaluation result is positive or negative. For example, the determination unit 130 performs calculation according to the determination model 111 using the attribute data of the user as an input to the determination model 111, and obtains an output value of the determination model 111. The obtained output value is the determination result. Specifically, the determination unit 130 determines whether to approve financing of money by a loan for the user on the basis of information such as the monthly income of the user. The determination unit 130 transmits the determination result to the terminal apparatus, which has transmitted the evaluation request. When the determination result is negative (for example, the examination of the loan indicates failure), the determination unit 130 notifies the estimation unit 140 that the determination result is negative.

When the determination result in the determination unit 130 is negative, the estimation unit 140 estimates an action to be presented in order to change the determination result to positive. In order to estimate the action, the estimation unit 140 includes an action candidate generation unit 141, an estimated value calculation unit 142, and a presented action output unit 143.

The action candidate generation unit 141 generates a plurality of action candidates. For example, the action candidate generation unit 141 generates a plurality of action candidates for changing the attribute data of the user within a range in which the constraint conditions indicated by the action constraint condition 113 are satisfied.

The estimated value calculation unit 142 calculates an estimated value of each action candidate by using the estimation model 112, for the user who has output the evaluation request. The estimated value of the individual action is calculated based on, for example, the execution probability and the improvement probability. The execution probability of the action is a probability that the user executes the action when the action is presented. The improvement probability of the action is a probability that the state of the user is improved when the user executes the action.

For example, the estimated value calculation unit 142 performs calculation according to the estimation model 112 using the attribute data of the user and the action candidates as inputs to the estimation model 112. Next, the estimated value calculation unit 142 obtains an estimated value of each action candidate as an output of the estimation model 112.

The presented action output unit 143 selects one of the action candidates and presents execution of the action indicated by the selected action candidate to the user. For example, the presented action output unit 143 selects an action candidate having the highest estimated value. Next, the presented action output unit 143 transmits information presenting execution of the action indicated by the selected action candidate to the terminal apparatus, which has transmitted the evaluation request.

The execution result observation unit 150 observes the execution status of the action of the user. For example, the execution result observation unit 150 refers to the observation target user table 114 to recognize the user to be observed. Next, the execution result observation unit 150 acquires predetermined attribute data of the user from the terminal apparatus of the observation target user. When there is a computer that manages the attribute data of the user (for example, a computer that manages the loan repayment status of the user), the execution result observation unit 150 may acquire the attribute data of the user from the computer.

When the execution result observation unit 150 is unable to acquire the execution result of the action of the observation target user from the user within a certain period of time, the execution result observation unit 150 determines that the action has not been executed. The execution result observation unit 150 adds, in the observation result, information indicating whether or not the observation target user has executed the presented action. In addition, when the user executes the presented action, the execution result observation unit 150 includes, in the observation result, whether the state of the user has improved or not as a result of the execution. Next, the execution result observation unit 150 updates the training data table 115 based on the observation result.

The estimation model update unit 160 updates the parameters of the estimation model 112 based on the training data included in the training data table 115. For example, when a predetermined number of observation results are newly added to the training data table 115, the estimation model update unit 160 executes the training process of the estimation model 112 based on the training data including the added observation results. As a result of the training process of the estimation model 112, for example, the parameters of the estimation model 112 are updated so that the estimated value calculation accuracy by the estimation model 112 will be improved.

With the server 100 having such a function, when evaluation of the user is determined and the determination result is negative, an action for improving the determination result is presented. Hereinafter, information used for presenting an action will be specifically described.

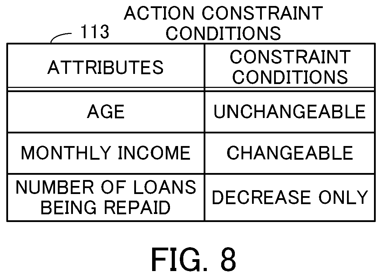

FIG. 8 is a diagram illustrating an example of action constraint conditions. In the action constraint conditions 113, an action constraint condition is set in association with an attribute of the user. For example, a constraint condition "unchangeable" is set for the attribute "age". That is, an action for changing the attribute "age" of the user is not presented.

A constraint condition "changeable" is set for the attribute "monthly income". That is, it is possible to present an action for changing the attribute "monthly income" of the user. With respect to the attribute "number of loans being repaid", a constraint condition "decrease only" is set. That is, regarding the attribute "number of loans being repaid" of the user, although it is possible to present an action for decreasing the number, an action for increasing the number is not presented.

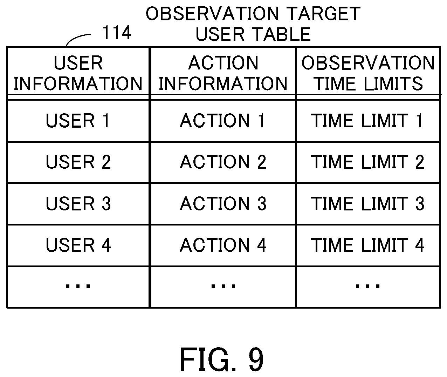

FIG. 9 is a diagram illustrating an example of the observation target user table. In the observation target user table 114, action information and an observation time limit are set in association with user information that uniquely identifies a user. The action information is information indicating an action presented to the corresponding user. The observation time limit is a time limit for observing the execution status of the action executed by the corresponding user. If the action is not executed by the user by the observation time limit, it is determined that the action has not been executed.

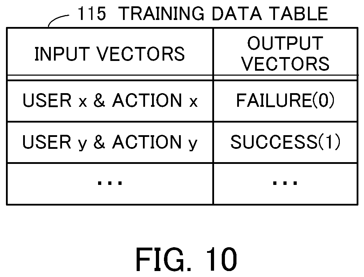

FIG. 10 is a diagram illustrating an example of the training data table. A plurality of training data are set in the training data table 115. Each training data includes an input vector and an output vector. The input vector includes user information (including attribute data) about a user who has received presentation of an action and information about the action presented to the user. The output vector includes information indicating whether the action has succeeded or failed. The output vector may include information indicating whether an action has been executed.

The server 100 presents an appropriate action using the estimation model 112 by using the information as described above. For example, the server 100 updates the estimation model 112 each time action presentation and execution result observation are repeated. Accordingly, the inference accuracy of the estimation model 112 is improved, and an appropriate action is presented.

For example, the server 100 performs the following action presentation process for each user included in a sequence of users {x₁, ..., xᵣ} given sequentially.

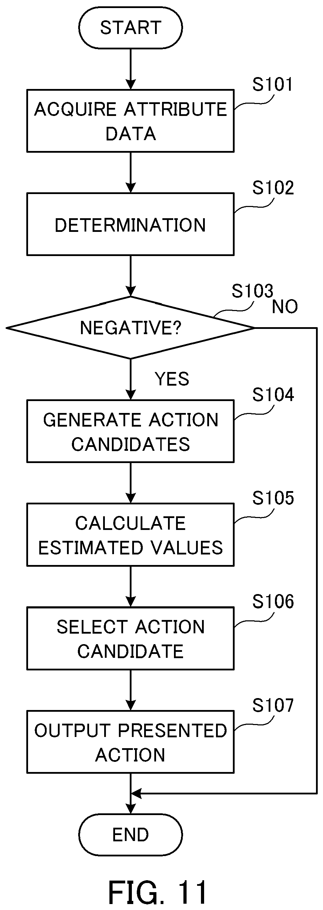

FIG. 11 is a flowchart illustrating an example of a procedure of the action presentation process. Hereinafter, the process illustrated in FIG. 11 will be described in order of step numbers.

[Step S101] The attribute data acquisition unit 120 acquires attribute data of a user who requests evaluation, for example, from a terminal apparatus used by the user.

[Step S102] The determination unit 130 evaluates the user based on the attribute data of the user and determines whether the evaluation result is positive or negative. The determination unit 130 transmits the determination result to the terminal apparatus used by the user.

[Step S103] If the evaluation result is positive, the determination unit 130 ends the action presentation process without presenting an action. If the evaluation result is negative, the determination unit 130 advances the process to step S104.

[Step S104] The action candidate generation unit 141 generates action candidates {a₁, a₂, ..., a_{K}} for changing the evaluation result of the user to positive (K is an integer indicating the number of generated action candidates). For example, the action candidate generation unit 141 generates a plurality of action candidates within the range of the constraint conditions indicated by the action constraint conditions 113 based on the attribute data of the user.

[Step S105] The estimated value calculation unit 142 calculates an estimated value of each of the generated action candidates using the estimation model 112. The estimated value is a value of "execution probability × improvement probability".

[Step S106] The presented action output unit 143 selects one of the action candidates as the action to be presented. For example, the presented action output unit 143 selects an action candidate having the highest estimated value.

[Step S107] The presented action output unit 143 transmits information for presenting the action indicated by the selected action candidate to the terminal apparatus of the user. In addition, the presented action output unit 143 sets, as the observation target, the user to whom the action has been presented, and sets information about the observation target user in the observation target user table 114.

In this way, an action is presented to a user who has received a negative determination.

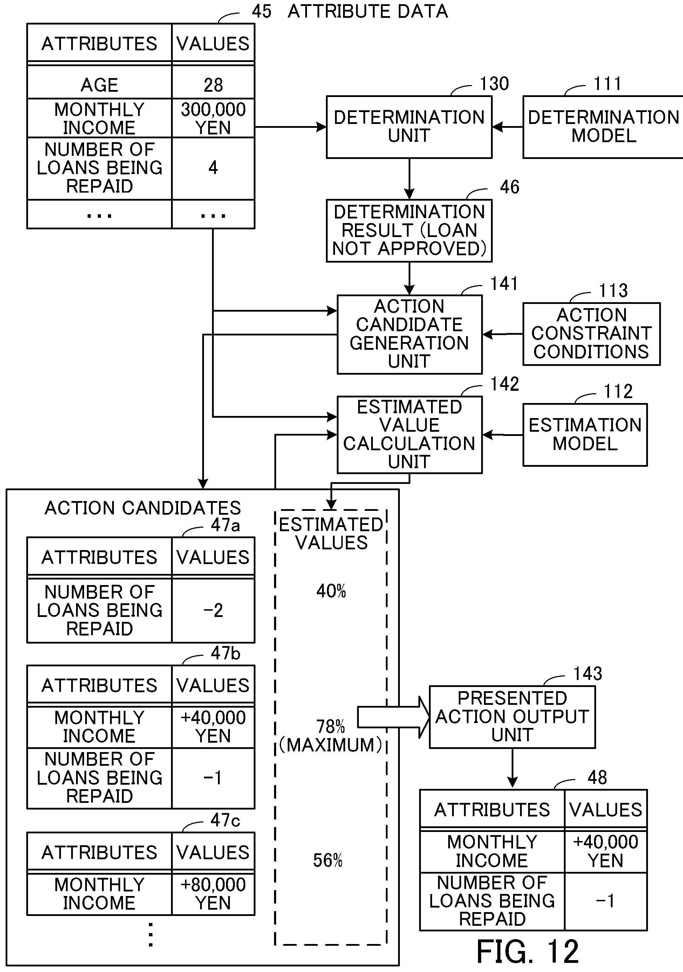

FIG. 12 is a diagram illustrating an example of action presentation. FIG. 12 illustrates an example of action presentation for a loan application. For example, attribute data 45 of the user includes the age, the monthly income, and the number of repaid loans. The determination unit 130 enters the attribute data 45 to the determination model 111 and obtains a determination result 46 of the calculation according to the determination model 111. It is assumed that the determination result 46 is a negative result indicating that the loan contract is not approved.

In response to the negative determination result 46, the action candidate generation unit 141 generates a plurality of action candidates 47a, 47b, 47c, ... based on the attribute data 45 and the action constraint conditions 113. The action candidate 47a indicates an action for reducing the number of loans being repaid by two. The action candidate 47b indicates an action for increasing the monthly income by 40,000 yen and decreasing the number of loans being repaid by one. The action candidate 47c indicates an action for increasing the monthly income by 80,000 yen.

The estimated value calculation unit 142 calculates an estimated value of each of the plurality of action candidates 47a, 47b, 47c, .... For example, the estimated value calculation unit 142 uses one action candidate and the attribute data 45 as inputs to the estimation model 112, so as to obtain an estimated value obtained by the calculation according to the estimation model 112. In the example in FIG. 12, the estimated value of the action candidate 47a is 40%. The estimated value of the action candidate 47b is 78%. The estimated value of the action candidate 47c is 56%. It is assumed that the action candidate 47b has the highest estimated value among all the action candidates 47a, 47b, 47c, ....

The presented action output unit 143 selects the action candidate 47b having the highest estimated value. Next, the presented action output unit 143 outputs the action indicated by the selected action candidate 47b as an action 48 to be presented.

Thereafter, the user who has received the presented action becomes an observation target. Then, the estimation model is updated based on the observation result of the observation target user.

Note that it is not difficult to observe the execution result of the action (whether the loan has been paid off, transition of the monthly income, and the like) as long as permission to acquire such information from the user is obtained. However, there is a possibility that the presented action is not executed, and the result is not immediately known.

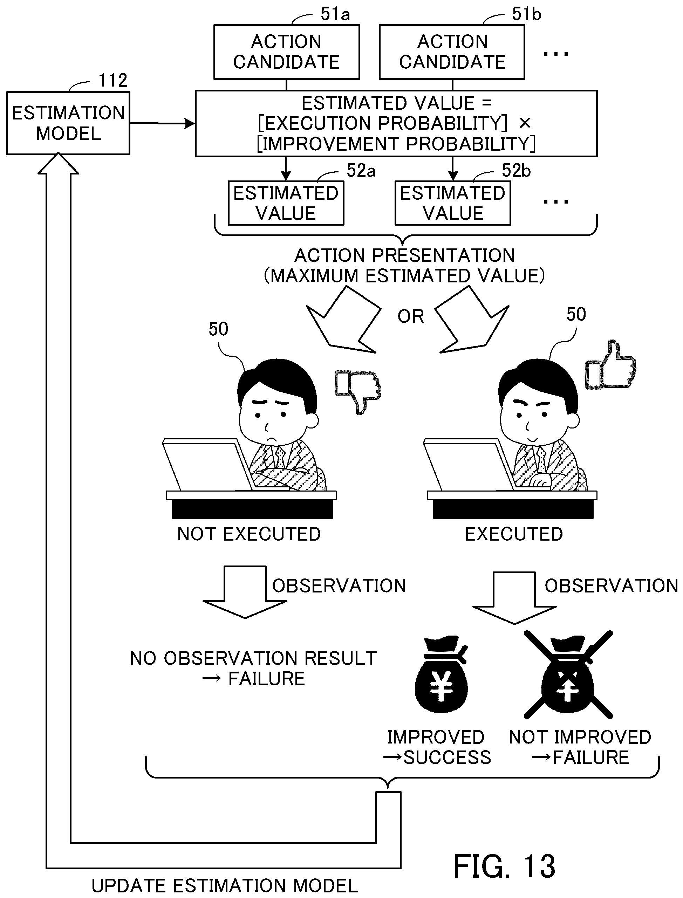

FIG. 13 is a diagram illustrating an example of an estimation model update process. For example, when a negative determination is received in the evaluation on a user 50, the action candidate generation unit 141 generates a plurality of action candidates 51a, 51b, .... The estimated value calculation unit 142 calculates estimated values 52a, 52b, ... for the plurality of action candidates 51a, 51b, ..., respectively. Each of the estimated values 52a, 52b, ... is, for example, a value of "execution probability × improvement probability" when an action indicated by an action candidate is presented. That is, each of the estimated values 52a, 52b, ... is a probability that an action is executed by the user 50 and the state of the user 50 is improved as intended by the executed action.

The presented action output unit 143 selects an action candidate corresponding to the highest estimated value. Next, the action indicated by the selected action candidate is presented to the user 50. Thereafter, the execution result observation unit 150 observes the execution status of the action executed by the user 50.

At this time, the user 50 is free to determine whether to execute the presented action. When the user 50 does not execute the presented action, the observation time limit is passed without obtaining any observation result. Then, the execution result observation unit 150 determines that the execution result of the action is a failure.

When the user 50 executes the presented action, the execution result observation unit 150 observes the execution result of the action and determines whether the situation of the user 50 has appropriately improved or not. If the state has improved, the execution result observation unit 150 determines that the execution result of the action is a success. If the state has not improved, the execution result observation unit 150 determines that the execution result of the action is a failure.

When the execution result of the action is determined, the estimation model update unit 160 updates the estimation model 112. For example, when the execution result of the action is a failure, the parameters of the estimation model 112 are updated so that the estimated value obtained when the action is set as an action candidate becomes a lower value than before. When the execution result of the action is a success, the parameters of the estimation model 112 are updated so that the estimated value obtained when the action is set as an action candidate becomes a higher value than before. By updating the estimation model 112, the accuracy in subsequent estimation value calculation using the estimation model 112 is improved.

The presentation of the action and the update of the estimation model are performed for each evaluation request that is given sequentially and that is transmitted from the user. By presenting actions to many users and updating the estimation model 112 in accordance with observation results, the accuracy of the estimation model 112 is improved.

Note that such training of the estimation model 112 results in an online learning problem. Therefore, it is possible to train the estimation model 112 by a learning algorithm for solving an online learning problem (contextual bandit algorithm/contextual Bayesian optimization algorithm).

That is, an efficient learning algorithm is applicable by regarding the training as an online learning problem. If the cost index is known, it is possible to deem the training as a contextual linear bandit problem, and the performance is theoretically expected to improve as the procedure progresses. If the cost index is unknown, it is possible to deem the training as a contextual Bayesian optimization problem, and an empirically high-performance algorithm is applicable.

Some of the presented actions take time to execute. Therefore, in view of the fact that it takes a certain period of time until the execution result is obtained, the execution result observation unit 150 continues observation within the observation time limit. As a result, the execution status of the action is observed for an appropriate period, and an accurate observation result is obtained.

By continuously repeating the presentation of the action and the update of the estimation model 112 as illustrated in FIG. 13, the improvement of the presented action is improved as the operation is continued. An action with high improvement is, for example, an action with a low execution cost (effort for the user to execute) and a high probability of improving the state of the user (changing the evaluation result positively) when the action is executed.

Even when the user executes an action and the value of a predetermined attribute is changed, if the amount of change of the value is insufficient, it is determined that the state of the user has not improved.

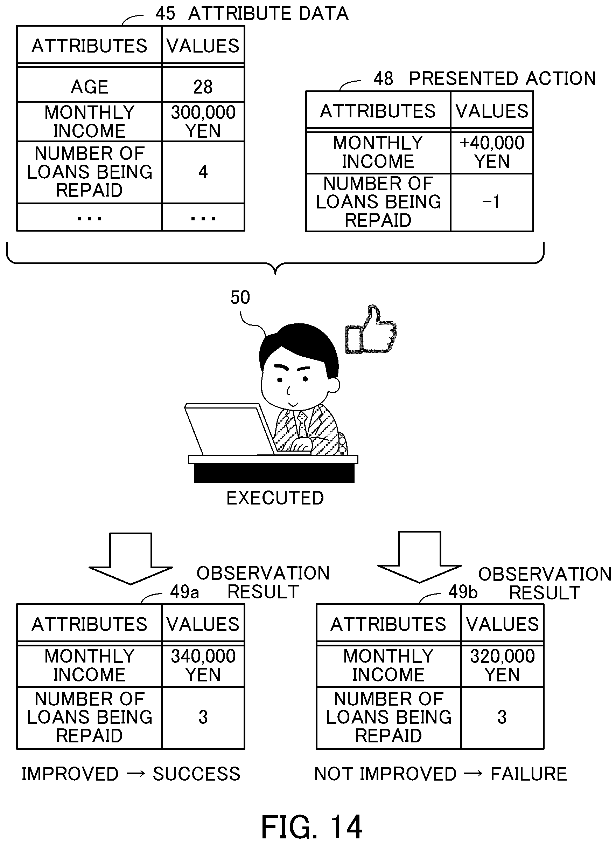

FIG. 14 is a diagram illustrating examples of an observation result after execution of a presented action. The presented action 48 indicates that the monthly income needs to be increased by 40,000 yen and the number of loans being repaid needs to be decreased by one. The user 50 performs the presented action 48. The result of executing the action is observed by the execution result observation unit 150.

An observation result 49a indicates that the monthly income has increased to 340,000 yen and the number of loans being repaid has decreased to three. In this case, since the monthly income has increased by 40,000 yen and the number of loans being repaid has decreased by one, it is determined that the state of the user 50 has improved. That is, the execution result of the action is a success.

An observation result 49b indicates that the monthly income has increased to 320,000 yen and the number of loans being repaid has decreased to three. In this case, although the number of loans being repaid has decreased by one, the increase in the monthly income is 20,000 yen. Since the increased amount of the monthly income is less than the increased amount indicated in the presented action, it is determined that the state of the user 50 has not improved. That is, the execution result of the action is a failure.

The parameters of the estimation model 112 are sequentially updated based on the observation results of the actions presented to a large number of users in the past. As a result, as the operation period of the server 100 becomes longer, the server 100 is able to present actions with a higher execution probability and improvement probability to the users.

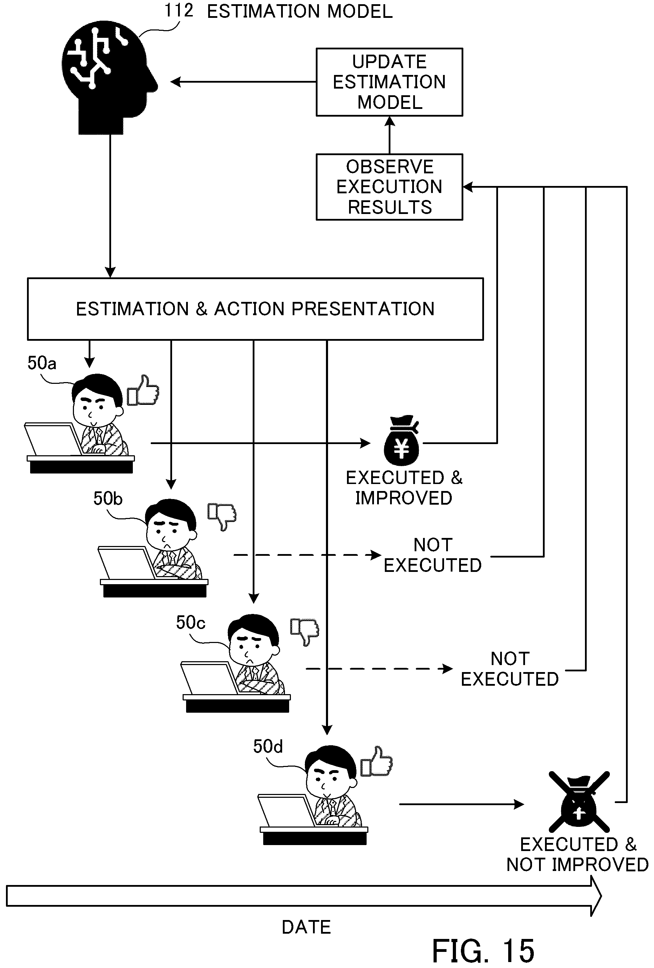

FIG. 15 is a diagram illustrating an example of an estimation model training process. For example, it is assumed that a plurality of users 50a, 50b, 50c, and 50d each transmits an evaluation request to the server 100 at a different time, and all of the users 50a, 50b, 50c, and 50d receive negative evaluations. In this case, an appropriate action is estimated for each of the users 50a, 50b, 50c, and 50d, and execution of the actions is presented.

The user 50a who receives the presentation of the first action has executed the presented action. As a result of executing the action, the state of the user 50a has improved. Accordingly, the execution result observation unit 150 observes that the state has been improved by the execution of the action. The estimation model update unit 160 updates the parameters of the estimation model 112 based on the observation result (successful case).

The user 50b who has received the presentation of the second action has not executed the presented action. Accordingly, after the observation time limit elapses from the presentation of the action, the execution result observation unit 150 obtains an observation result indicating that the action has not been executed. The estimation model update unit 160 updates the parameters of the estimation model 112 based on the observation result (failure case).

The user 50c who receives the presentation of the third action has not executed the presented action, either. Accordingly, the observation result regarding the user 50c is also used as a failure case for updating the parameters of the estimation model 112.

The user 50d who has received the presentation of the fourth action has executed the presented action. Although the action has been executed, the state of the user 50d has not been improved. Accordingly, the execution result observation unit 150 observes that the state has not been improved by the execution of the action. The estimation model update unit 160 updates the parameters of the estimation model 112 based on the observation result (failure case).

By training the estimation model 112 based on such a success case or a failure case as described above, the inference accuracy of the estimation model 112 is improved.

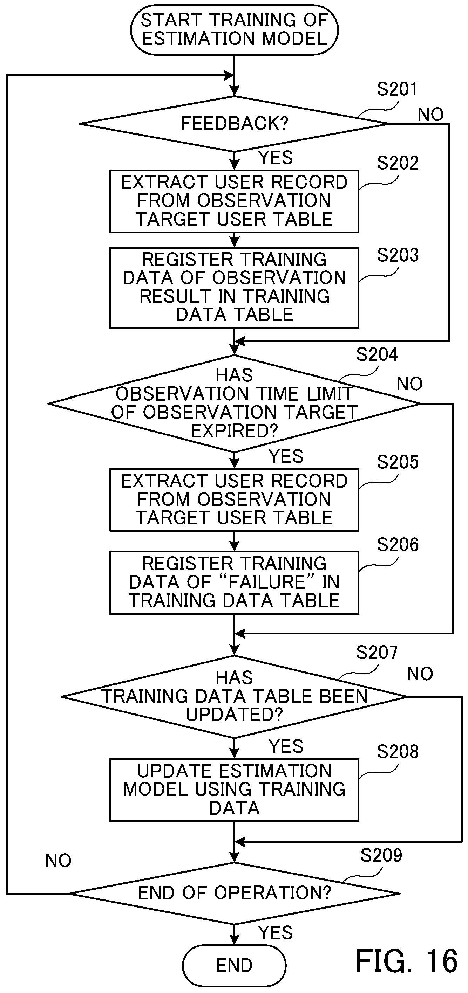

FIG. 16 is a flowchart illustrating an example of a procedure of the estimation model training process. Hereinafter, the process illustrated in FIG. 16 will be described in order of step numbers.

[Step S201] The execution result observation unit 150 determines whether there is a feedback (information about a success or a failure) regarding an action execution result from any of the observation target users. If there is a feedback, the execution result observation unit 150 advances the process to step S202. If there is no feedback, the execution result observation unit 150 advances the process to step S204.

[Step S202] The estimation model update unit 160 extracts, from the observation target user table 114, a record corresponding to a user corresponding to the feedback. The estimation model update unit 160 deletes the extracted record from the observation target user table 114.

[Step S203] The estimation model update unit 160 adds the observation result obtained by the feedback to the extracted record as a label (information indicating a correct answer) of the training data. The estimation model update unit 160 registers the record to which the label of the observation result has been added in the training data table 115 as training data. The training data includes the attribute data of the user, the information about the presented action, and the label.

[Step S204] The estimation model update unit 160 refers to the observation target user table 114 and determines whether there is an observation target user whose observation time limit has expired. When there is a corresponding user, the estimation model update unit 160 advances the process to step S205. If there is no corresponding user, the estimation model update unit 160 advances the process to step S207.

[Step S205] The estimation model update unit 160 extracts a record of the user whose observation time limit has expired from the observation target user table 114. The estimation model update unit 160 deletes the extracted record from the observation target user table 114.

[Step S206] The estimation model update unit 160 adds a label of "failure" to the extracted record. The estimation model update unit 160 registers the labeled record in the training data table 115 as training data.

[Step S207] The estimation model update unit 160 determines whether the training data table 115 has been updated. When the training data table 115 has been updated, the estimation model update unit 160 advances the process to step S208. If the training data table 115 has not been updated, the estimation model update unit 160 advances the process to step S209.

[Step S208] The estimation model update unit 160 updates the estimation model 112 using the training data registered in the training data table 115. For example, the estimation model update unit 160 performs calculation according to the estimation model 112 using the attribute data and the information about the action of the training data as inputs to the estimation model 112, and obtains an estimated value of the action as an output of the estimation model 112. The estimation model update unit 160 compares the estimated values based on the plurality of training data with the labels of the training data, and updates the values of the parameters (for example, the weight parameters of the neural network) of the estimation model 112 so as to improve the accuracy of the estimated values.

[Step S209] The estimation model update unit 160 determines whether there is an instruction to end the operation of the server 100. When there is an instruction to end the operation, the estimation model update unit 160 ends the estimation model training process. If there is no instruction to end the operation, the estimation model update unit 160 advances the process to step S201.

In this way, the estimation model 112 is updated. As a result, the calculation accuracy of an estimated value using the estimation model 112 is improved.

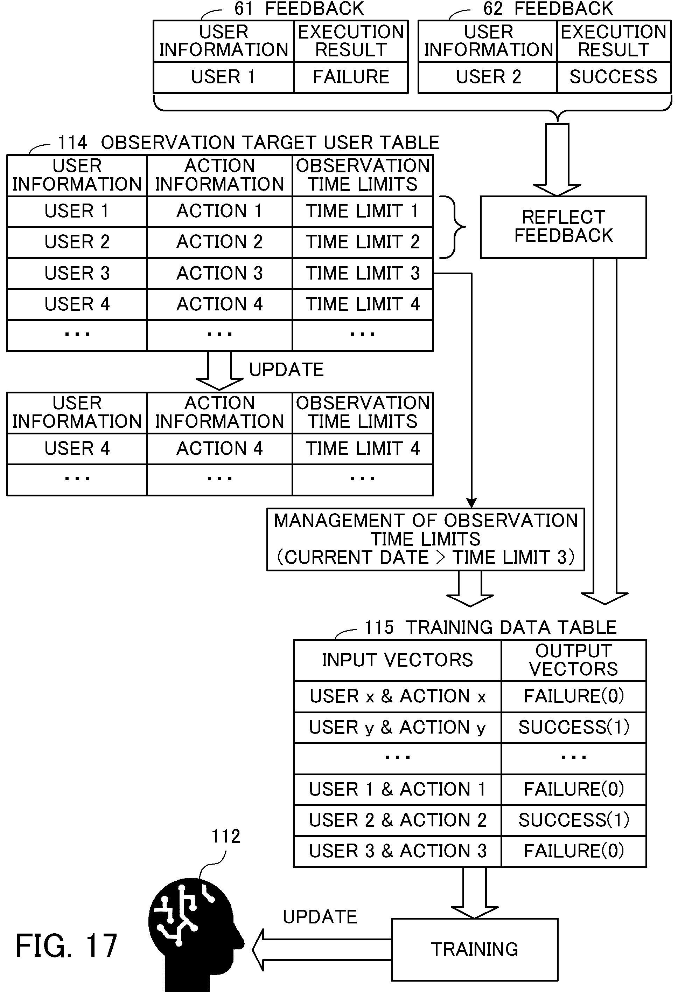

FIG. 17 is a diagram illustrating an example of the estimation model update process. For example, the execution result observation unit 150 acquires the execution results of the actions of a "user 1" and a "user 2" as feedbacks 61 and 62 from these users. The feedback 61 indicates that the execution result of the action is "failure". The feedback 62 indicates that the execution result of the action is "success".

The estimation model update unit 160 extracts the records of the "user 1" and the "user 2" from the observation target user table 114. Next, the estimation model update unit 160 adds the execution results of the users corresponding to their respective records extracted, and registers the data in the training data table 115 as training data. For example, based on the feedback 61, training data in which a feature vector of "user 1 & action 1" is set as an input vector and "0" (a value indicating failure) is set as an output vector is registered. Further, based on the feedback 62, training data in which a feature vector of "user 2 & action 2" is set as an input vector and "1" (a value indicating success) is set as an output vector is registered.

The estimation model update unit 160 compares the observation time limit in each record of the observation target user table 114 with the current date. Then, the estimation model update unit 160 extracts a record in which an observation time limit before the current date is set. In the example in FIG. 17, the "time limit 3" in the record related to the "user 3" is a date before the current date. Therefore, the estimation model update unit 160 registers, in the training data table 115, training data in which a label indicating "failure" has been added to the record related to the "user 3".

When new training data is registered in the training data table 115, the estimation model update unit 160 updates the observation target user table 114. For example, the estimation model update unit 160 deletes the records of the users corresponding to the feedbacks 61 and 62 and the user whose observation time limit has expired from the observation target user table 114.

The estimation model update unit 160 updates the estimation model 112 based on the training data table 115. The estimation model update unit 160 trains the estimation model 112 using, for example, all the training data registered in the training data table 115. The estimation model update unit 160 may train the estimation model 112 using training data newly registered in the training data table 115.

As described above, it is possible to present an appropriate action using the estimation model 112. As a result, a situation in which the user receives an undesirable result even if a positive evaluation is obtained by the determination model 111 is suppressed. For example, the user is presented with an action not only for passing the examination of the loan but also for paying off the loan.

### [Other Embodiments]

In the second embodiment, although an example of presentation of an action related to credit examination of a loan application has been described, the action presentation process described in the second embodiment is also applicable to presentation of an action associated with pass/fail determination for other evaluations. For example, the technique described in the second embodiment is also applicable to an action presentation process not only for passing a qualification test which a user has previously failed, but also for obtaining execution capability of work using the qualification. Further, the technique described in the second embodiment is also applicable to an action presentation process not only for improving a numerical value of a test result of a test (blood test or the like) for examining a health condition, but also for truly helpful disease prevention.

Although the embodiments have been described as examples, the configuration of any one of units described in the embodiments may be replaced with another configuration having the same function. In addition, any other components or processes may be added. Furthermore, any two or more configurations (features) of the above-described embodiments may be combined.

According to one aspect, an action with a high possibility of improving a state is presented.

## Claims

1. A computer program that causes a computer to execute a process comprising:
acquiring second information (6) that indicates whether an action for improving a state of a user (1) to a predetermined criterion has been executed by the user (1) who has confirmed first information (5) indicating the action and whether the state of the user (1) has reached the predetermined criterion; and
training a first machine learning model (3) used for determining the action, by using training data obtained based on the first information (5) and the second information (6).

2. The computer program according to claim 1, wherein the process further includes
determining the action by using the first machine learning model (3), and
outputting the first information (5) indicating the determined action.

3. The computer program according to claim 2,
wherein the process further includes acquiring a determination result of a predetermined evaluation using attribute data (7) indicating an attribute of the user (1) by using a second machine learning model (4), and
wherein the determining of the action includes determining the action in a case where the determination result is negative.

4. The computer program according to claim 3,
wherein the acquiring of the determination result of the predetermined evaluation includes evaluating whether to make a contract with the user (1) by using the second machine learning model (4), and
wherein the determining of the action includes determining the action for acquiring a state in which the user (1) is able to fulfill the contract in a case where the contract is concluded by using the first machine learning model (3).

5. The computer program according to claim 2, wherein the determining of the action includes
generating a plurality of items of third information (8a, 8b, ...) indicating action candidates for improving the state of the user (1) to the predetermined criterion,
calculating, for each of the plurality of items of third information (8a, 8b, ...), an estimated value (9a, 9b, ...) indicating a probability that the user (1) executes a corresponding action candidate in a case where the user (1) confirms the corresponding action candidate and the state of the user (1) reaches the predetermined criterion by executing the corresponding action candidate by the user (1), and
determining the action based on the estimated value (9a, 9b, ...) of each of the plurality of items of third information (8a, 8b, ...).

6. The computer program according to claim 1, wherein the training of the first machine learning model (3) includes generating the training data to which a label of success has been added in a case where the action has been executed by the user (1) and the state of the user (1) has reached the predetermined criterion and generating the training data to which a label of failure has been added in a case where the action has not been executed by the user (1) or in a case where the state of the user (1) has not reached the predetermined criterion although the action has been executed by the user (1).

7. The computer program according to claim 1, wherein the acquiring of the second information (6) includes setting a time limit for observing the execution of the action by the user (1) and generating the training data to which a label of failure has been added in a case where the execution result of the action by the user (1) has not been acquired even after the time limit.

8. An information processing method executed by a computer, the information processing method comprising:
acquiring second information (6) that indicates whether an action for improving a state of a user (1) to a predetermined criterion has been executed by the user (1) who has confirmed first information (5) indicating the action and whether the state of the user (1) has reached the predetermined criterion; and
training a first machine learning model (3) used for determining the action, by using training data obtained based on the first information (5) and the second information (6).

9. An information processing apparatus (10) comprising:
processing means (12) for:
acquiring second information (6) that indicates whether an action for improving a state of a user (1) to a predetermined criterion has been executed by the user (1) who has confirmed first information (5) indicating the action and whether the state of the user (1) has reached the predetermined criterion, and
training a first machine learning model (3) used for determining the action, by using training data obtained based on the first information (5) and the second information (6).
